# EUROPÄISCHE PATENTSCHRIFT

(11) **EP 3 280 613 B1**
(45) Veröffentlichungstag und Bekanntmachung des Hinweises auf die Patenterteilung: **19.08.2020**
(21) Anmeldenummer: 16712936.0
(22) Anmeldetag: 01.04.2016
(51) Int. Cl.: B60N 2/06, B60N 2/07, B60N 2/08, B60N 2/20, B60N 2/12, B60N 2/02

(54) **LÄNGSEINSTELLER, FAHRZEUGSITZ**
LONGITUDINAL ADJUSTMENT MECHANISM, VEHICLE SEAT
DISPOSITIF DE RÉGLAGE EN LONGUEUR, SIÈGE DE VÉHICULE

(30) Priorität: 07.04.2015 DE 102015206165
(43) Veröffentlichungstag der Anmeldung: 14.02.2018
(73) Patentinhaber: Adient Luxembourg Holding S.à r.l., 1855 Luxembourg (LU)
(72) Erfinder: UTZINGER, Karl, 66919 Weselberg (DE); SPRENGER, Erik, 42929 Wermelskirchen (DE); ZACHARIAS, Michael, 42799 Leichlingen (DE)
(74) Vertreter: Liedhegener, Ralf
(86) Internationale Anmeldenummer: PCT/EP2016/057209
(87) Internationale Veröffentlichungsnummer: WO 2016/162279

(56) Entgegenhaltungen:
- DE-A1-102004 038 587
- DE-B3-102004 057 900

## Beschreibung

Die Erfindung betrifft einen Längseinsteller für einen längseinstellbaren Fahrzeugsitz mit den Merkmalen des Oberbegriffs des Anspruchs 1, sowie einen Fahrzeugsitz.

### Stand der Technik

Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus verschiebbar sein.

In an sich bekannter Weise ermöglicht eine Easy-Entry-Verstellvorrichtung für einen Fahrzeugsitz eine Verstellbarkeit des Fahrzeugsitzes zwischen einer Gebrauchsposition und einer Easy-Entry-Position. Eine solche Verstellbarkeit ist insbesondere für solche Fahrzeuge besonders vorteilhaft, die lediglich eine Türe pro Fahrzeugseite haben. Beim Überführen des Fahrzeugsitzes von der Gebrauchsposition in die Easy-Entry-Position wird sowohl ein Lehnenbeschlag der Verstellvorrichtung, als auch eine Sitzlängsverriegelung der Verstellvorrichtung gelöst. Das Lösen des Lehnenbeschlags ermöglicht ein Verschwenken der Sitzlehne des Fahrzeugsitzes nach vorn in Richtung eines Sitzteils des Fahrzeugsitzes, während das Lösen der Sitzlängsverriegelung ein Vorschieben des gesamten Fahrzeugsitzes in Fahrtrichtung ermöglicht. Ein Fahrzeuginsasse erlangt somit Zugang zu den Rücksitzen des Fahrzeugs.

Aus der DE 100 41 605 C1 ist allgemein eine Sitzlängsverstellung mit einem Schienenpaar, bestehend aus einer Oberschiene und einer Unterschiene sowie einer Sperre zur Bewegungsverhinderung von Oberschiene zur Unterschiene bekannt. Die Sperre ist als Verriegelungsplatte ausgebildet, welche mittels einer Feder mit der Oberschiene verbunden ist und zugleich eine Halterung für ein Ende der Feder aufweist.

Aus der DE 102 02 179 A1 ist allgemein ein Längseinsteller für einen Fahrzeugsitz mit Einstiegseinstellung bekannt, welcher eine Memory-Vorrichtung zur Erfassung einer relativen Sitzlängsverschiebung aufweist. Die Memory-Vorrichtung ist hierbei im Inneren eines zwischen einer ersten Sitzschiene und einer zweiten Sitzschiene gebildeten Bauraums angeordnet und mit der ersten Sitzschiene verbunden. Die Memory-Vorrichtung weist ein mit der zweiten Sitzschiene in Eingriff bringbares Sperrelement auf, welches im Falle einer Betätigung der Sperrfunktion sämtliche auf das Sperrelement wirkenden Kräfte in die Memory-Vorrichtung einleitet.

Aus der DE 10 2004 038 587 A1 ist eine Vorrichtung zur selbsttätigen Arretierung einer Komponente bei Erreichen einer zuvor eingenommen und zwischenzeitlich zur Einnahme einer unterschiedlichen Funktionsposition verlassenen Einstellposition bekannt, wobei die Einstellposition auf einem Einstellbereich der Komponente änderbar vorgesehen ist, sowie die selbsttätige Arretierung der Komponente mittels eines Getriebemechanismus und eines Arretierelements bewirkbar ist, wobei der Getriebemechanismus die Bewegung der Komponente aus ihrer Einstellposition in ihre Funktionsposition und zurück mittels einer variablen Übersetzung auf das Arretierelement überträgt.

### Aufgabe

Der Erfindung liegt die Aufgabe zu Grunde, einen Längseinsteller der eingangs genannten Art zu verbessern, sowie einen Fahrzeugsitz mit einem erfindungsgemäßen Längseinsteller bereitzustellen.

### Lösung

Diese Aufgabe wird erfindungsgemäß gelöst, durch einen Längseinsteller für einen längseinstellbaren Fahrzeugsitz. Der Längseinsteller weist ein Schienenpaar mit einer strukturfesten zweiten Sitzschiene, insbesondere einer Unterschiene, und einer in dieser zweiten Sitzschiene geführten, sitzfesten ersten Sitzschiene, insbesondere einer Oberschiene, auf. Ferner weist der Längseinsteller eine Memory-Vorrichtung, welche zur Speicherung der Position der sitzfesten ersten Sitzschiene in Bezug auf die strukturfeste zweite Sitzschiene eingerichtet ist, sowie ein in der ersten Sitzschiene geführtes Sperrelement zum Blockieren der ersten Sitzschiene in ihrer Bewegung relativ zur zweiten Sitzschiene. Ein Blockieren der ersten Sitzschiene relativ zur zweiten Sitzschiene mittels des Sperrelements erfolgt, indem das Sperrelement in Eingriff mit einer Verzahnung und/oder einem Lochbild der zweiten Sitzschiene gebracht wird. Das Sperrelement ist mittels der Memory-Vorrichtung betätigbar. Die Memory-Vorrichtung befindet sich hierbei außerhalb des Kraftflusses zwischen der ersten Sitzschiene und der zweiten Sitzschiene, während sich das zur Blockierung der ersten Sitzschiene in Eingriff mit einer Verzahnung und/oder einem Lochbild der zweiten Sitzschiene befindliche Sperrelement im Kraftfluss befindet. Allgemein weist der Längseinsteller zusätzlich zu dem Sperrelement wenigstens ein weiteres Verriegelungselement auf, welches dazu eingerichtet ist, die sitzfeste erste Sitzschiene in Bezug auf die strukturfeste zweite Sitzschiene zu verriegeln. Zur genaueren Unterscheidung sei darauf hingewiesen, dass das Sperrelement lediglich zur Blockierung einer Bewegung der ersten Sitzschiene relativ zur zweiten Sitzschiene beim Erreichen der gespeicherten Memory-Position eingerichtet ist, während das Verriegelungselement in an sich bekannter Weiser einer Einstellung einer Sitzlängsposition dient und zur Aufnahme von bei einem Frontalaufprall auftretenden Kräften eingerichtet ist.

Beim Erreichen der gespeicherten Memory-Position erfolgt eine Blockierung der ersten Sitzschiene mit der zweiten Sitzschiene mittels des Sperrelements. Durch die Bewegung der ersten Sitzschiene relativ zur zweiten Sitzschiene müssen durch die abrupt eingreifende Blockierung teils sehr hohe Kräfte aufgefangen werden. Ein hierbei erwünschter Kraftfluss verläuft von der ersten Sitzschiene über das in der ersten Sitzschiene geführte Sperrelement auf eine Verzahnung oder ein Lochbild der zweiten Sitzschiene. Dadurch, dass die Memory-Vorrichtung oder auch nur Teile der Memory-Vorrichtung sich außerhalb des Kraftflusses befinden, müssen diese auch nicht für eine Aufnahme hoher Kräfte in Längsrichtung des Schienenpaares konstruiert sein. Folglich eröffnet sich erfindungsgemäß die Möglichkeit die Memory-Vorrichtung mit entsprechend dünneren Materialien zu fertigen, welche den lediglich geringeren Festigkeitsanforderungen gerecht werden müssen. Hierdurch kann die Memory-Vorrichtung beispielsweise kompakter im Bauvolumen und demnach auch leichter ausgeführt werden.

Vorteilhafte Ausgestaltungen, welche einzeln oder in Kombination miteinander eingesetzt werden können, sind Gegenstand der Unteransprüche.

Das Sperrelement des Längseinstellers kann in der ersten Sitzschiene angeordnet sein und insbesondere in einer Ausnehmung der ersten Sitzschiene geführt sein. Ferner kann die Ausnehmung der ersten Sitzschiene zur Wegbegrenzung für das Sperrelement einen oberen Anschlag und einen unteren Anschlag aufweisen. Hierbei kann ein Anliegen des Sperrelements am unteren Anschlag der Freigabestellung entsprechen. Des Weiteren kann ein Anliegen des Sperrelements am oberen Anschlag der Blockierstellung entsprechen.

Alternativ oder zusätzlich kann das Sperrelement eine Schräge aufweisen. Die Schräge kann im Falle einer Vorwärtsbewegung der ersten Sitzschiene relativ zur zweiten Sitzschiene mit einer bereichsweise abgerundeten Kontur der Verzahnung zusammenwirken.

Ebenso kann die Memory-Vorrichtung zum Betätigen des Sperrelements einen mit einem Getriebe wirkverbundenen und relativ zu dem Getriebe beweglichen Betätigungsarm aufweisen.

Das Sperrelement kann mittels einer eine Rückstellfeder selbstständig in die Blockierstellung oder die Freigabestellung überführbar sein. Die Rückstellfeder kann insbesondere als Zugfeder oder als Druckfeder ausgestaltet sein.

Wenn die Rückstellfeder in Form einer Druckfeder ausgestaltet ist, welche das Sperrelement selbstständig in die Freigabestellung bewegt, kann der Betätigungsarm der Memory-Vorrichtung bevorzugt von unten her, entgegen der Druckkraft der Rückstellfeder an dem Sperrelement angreifen.

Wenn die Rückstellfeder alternativ in Form einer Zugfeder ausgestaltet ist, welche das Sperrelement selbstständig in die Blockierstellung bewegt, kann der Betätigungsarm der Memory-Vorrichtung bevorzugt von oben her, entgegen der Zugkraft der Rückstellfeder an dem Sperrelement angreifen. Weiter kann der Betätigungsarm hierbei, bei einem Wiedererreichen der Memory-Position, das Sperrelement aus der Freigabestellung freigeben. Ferner kann eine fixe Verbindung zwischen je einem Endabschnitt der Rückstellfeder und jeweils der ersten Sitzschiene und dem Sperrelement vorgesehen sein.

Ferner wird die Aufgabe erfindungsgemäß gelöst, durch einen Fahrzeugsitz mit wenigstens einem Längseinsteller gemäß der vorhergehenden Beschreibung.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes,
- Fig. 2:: eine schematische Darstellung einer Draufsicht auf ein Schienenpaar mit erster Sitzschiene und zweiter Sitzschiene,
- Fig. 3:: einen Längsschnitt A-A des Schienenpaares von Fig. 2,
- Fig. 4:: einen Längsschnitt C-C des Schienenpaares von Fig. 2,
- Fig. 5:: einen Querschnitt D-D des Schienenpaares von Fig. 2,
- Fig. 6:: eine perspektivische Darstellung einer möglichen Ausgestaltung einer Memory-Vorrichtung zur Betätigung des Sperrelements, und
- Fig. 7:: eine Querschnittsdarstellung eines Schienenpaares eines erfindungsgemäßen Längseinstellers mit Memory-Vorrichtung.

Die Zeichnungen werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne und wie üblich in Fahrtrichtung ausgerichtet ist. Der Fahrzeugsitz 1 kann jedoch auch in abweichender Ausrichtung, beispielsweise quer zur Fahrtrichtung verbaut werden.

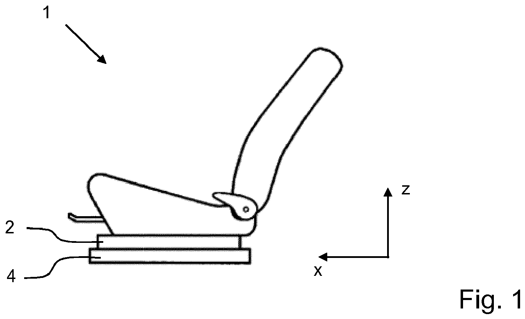

Der in Fig. 1 gezeigte Fahrzeugsitz 1 ist in einer Gebrauchsstellung mit aufgerichteter Lehne auf einem erfindungsgemäßen Längseinsteller montiert. Der erfindungsgemäße Längseinsteller weist wenigstens ein, üblicherweise zwei Sitzschienenpaare auf, welche jeweils eine erste Sitzschiene 2 und eine zweite Sitzschiene 4 umfassen. Die erste Sitzschiene 2 ist hierbei relativ zur zweiten Sitzschiene 4 in Längsrichtung verschiebbar. Der Fahrzeugsitz 1 ist hierbei mit der ersten Sitzschiene 2 fest verbunden. Die zweite Sitzschiene 4 ist üblicherweise mit einem nicht dargestellten Fahrzeugboden und/oder einer Fahrzeugstruktur verbunden. Der Fahrzeugsitz 1 ist zusammen mit der sitzfesten, ersten Sitzschiene 2 relativ zu der strukturfesten, zweiten Sitzschiene 4 in Längsrichtung x verschiebbar. Vorzugsweise weist der Fahrzeugsitz zwei im Wesentlichen symmetrisch zu einer Mittelachse orientierte Längseinsteller auf.

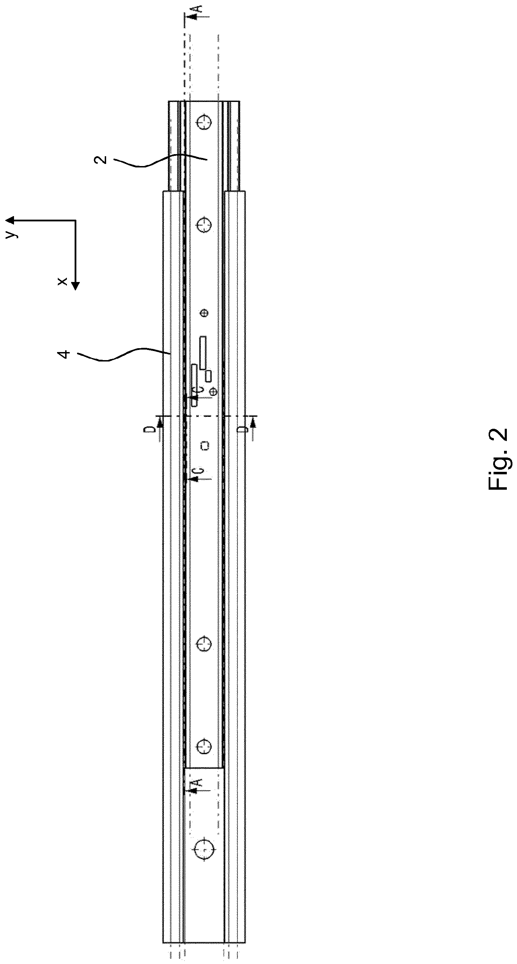

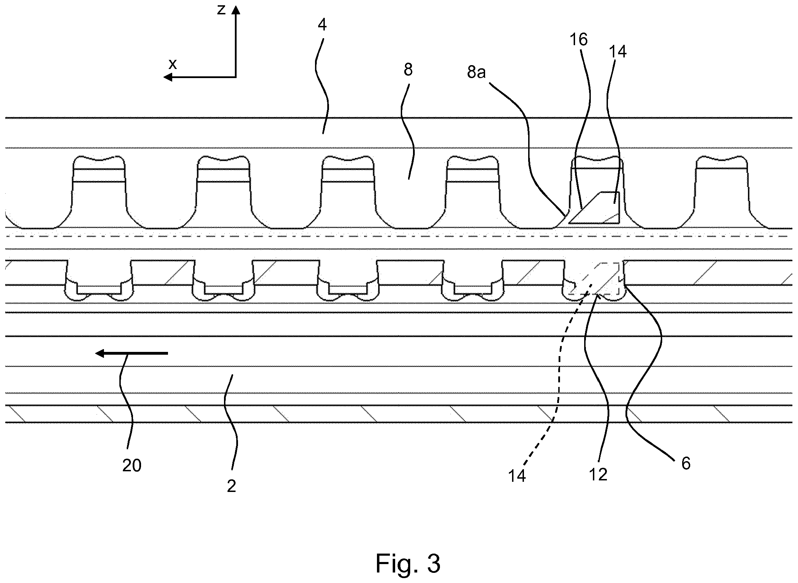

In Fig. 2 ist eine schematische Darstellung einer Draufsicht auf ein Schienenpaar mit erster Sitzschiene 2 und zweiter Sitzschiene 4 gezeigt. Das Schienenpaar besteht aus einer mit der Fahrzeugstruktur verbindbaren zweiten Sitzschiene 4 und einer sitzfesten ersten Sitzschiene 2. Die erste Sitzschiene 2 und die zweite Sitzschiene 4 umgreifen einander wechselseitig in an sich bekannter Weise und sind in Längsrichtung x verschiebbar aneinander gelagert. Darüber hinaus dient die Ansicht gemäß Fig. 2 der Kennzeichnung der Schnittebenen, welche in den Figuren 3 bis 5 dargestellt sind.

Fig. 3 zeigt ein Längsschnitt A-A des Schienenpaares gemäß Fig. 2. Wie in Fig. 3 dargestellt, weist die zweite Sitzschiene 4 eine Verzahnung 8 auf, mit welcher das Sperrelement 14 in Eingriff bringbar ist. Das Sperrelement 14 befindet sich gemäß der Darstellung von Fig. 3 in der Blockierstellung, das bedeutet in Eingriff mit der Verzahnung 8 der zweiten Sitzschiene 4. Die Freigabestellung des Sperrelements 14, in welcher sich das Sperrelement 14 in der Ausnehmung 6 der ersten Sitzschiene 2 und außer Eingriff mit der Verzahnung 8 der zweiten Sitzschiene 4 befindet, ist gestrichelt dargestellt. Wenn das Sperrelement 14 in der Freigabestellung gehalten ist, liegt es bevorzugt an einem unteren Anschlag 12 an, wobei der untere Anschlag 12 einer in Einbaurichtung der ersten Sitzschiene 2 unteren Begrenzung der Ausnehmung 6 entspricht, in welcher das Sperrelement 14 geführt ist.

Ferner ist in Fig. 3 gezeigt, dass das Sperrelement 14 eine Schräge 16 aufweist, diese Schräge 16 dient der leichteren Aussteuerbarkeit des Sperrelements 14 aus der Verzahnung 8 der zweiten Sitzschiene 4. Hierbei wirkt die Schräge 16, im Falle einer durch dem Pfeil 20 angedeuteten Vorwärtsbewegung der ersten Sitzschiene 2 relativ zur zweiten Sitzschiene 4, mit der bereichsweise abgerundeten Kontur 8a der Verzahnung 8 zusammen, so dass das Sperrelement 14 zum Beginn der Vorwärtsbewegung auf diese Weise schneller aus der Verzahnung 8 ausgetrieben wird, bevor ein entsprechende abgeschlossene Bewegung des Sperrelements 14 durch einen Betätigungsarm einer Memory-Vorrichtung bewirkt werden kann.

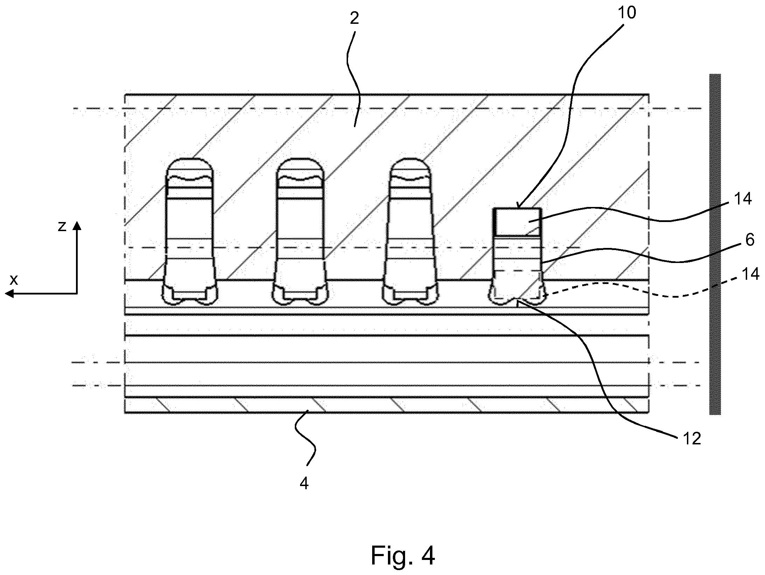

In Fig. 4 ist ein Längsschnitt C-C des Schienenpaares gemäß Fig. 2 dargestellt. In dieser Darstellung ist gezeigt, dass das Sperrelement 14 in der Blockierstellung an einem oberen Anschlag 10 der Ausnehmung 6 der ersten Sitzschiene 2 anliegt und seine Bewegung in Vertikalrichtung z begrenzt ist. In der gestrichelt dargestellten Freigabestellung befindet sich das Sperrelement 14 in Kontakt mit dem unteren Anschlag 12 der Ausnehmung 6 der ersten Sitzschiene 2.

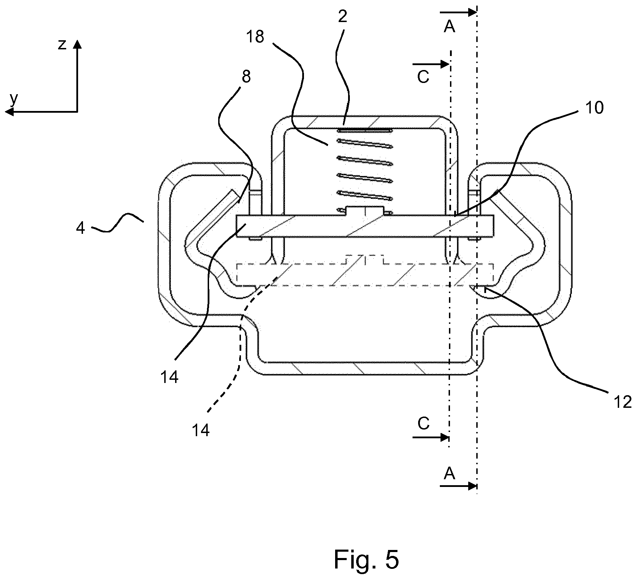

Fig. 5 zeigt weiter einen Querschnitt D-D des Schienenpaares gemäß Fig. 2. Bei dem Ausführungsbeispiel nach Fig. 5 ist das Sperrelement 14 zunächst in seiner Blockierstellung in Eingriff mit der Verzahnung 8 der zweiten Sitzschiene 4 dargestellt. Die Freigabestellung, in welcher das Sperrelement 14 außer Eingriff mit der zweiten Sitzschiene 4 ist, ist abermals gestrichelt dargestellt.

Die Rückstellfeder 18 kann vorliegend als Zugfeder oder als Druckfeder ausgestaltet sein, je nachdem ob das Sperrelement 14 selbstständig die Blockierstellung oder die Freigabestellung einnehmen soll.

Im Falle eines selbstständig die Freigabestellung einnehmenden Sperrelements 14 mit einer Druckfeder ist es bevorzugt, wenn der Betätigungsarm der Memory-Vorrichtung von unten her, entgegen der Druckkraft der Rückstellfeder 18 angreift und das Sperrelement 14 beim Erreichen der Memory-Position in die Blockierstellung bewegt.

Im Falle der Ausgestaltung der Rückstellfeder 18 in Form einer Zugfeder, welche das Sperrelement 14 selbstständig in die Blockierstellung bewegt, ist es bevorzugt vorgesehen, dass ein nicht dargestellter Betätigungsarm der Memory-Vorrichtung von oben her, entgegen der Zugkraft der Rückstellfeder 18 an dem Sperrelement 14 angreift. Der Betätigungsarm bewegt das Sperrelement 14 zunächst beim Verlassen der Memory-Position in die Freigabestellung und hält es in dieser fest. Bei einem späteren Erreichen der Memory-Position gibt der Betätigungsarm das Sperrelement 14 aus der Freigabestellung frei, wodurch die Rückstellfeder 18 das Sperrelement 14 wieder in die Blockierstellung bewegt. Hierbei ist ferner eine nicht dargestellte fixe Verbindung zwischen je einem Endabschnitt der Rückstellfeder 18 und jeweils der ersten Sitzschiene 2 und dem Sperrelement 14 vorgesehen. Hierzu kann der jeweilige Endabschnitt der Rückstellfeder 18 beispielsweise in einen in der ersten Sitzschiene 2 und/oder an dem Sperrelement 14 vorgesehenen Haken eingeführt sein.

Das Sperrelement 14 ist gemäß vorliegender Ausführungsform in der ersten Sitzschiene 2 angeordnet und in einer Ausnehmung 6 der ersten Sitzschiene 2 geführt. Die Ausnehmung 6 der ersten Sitzschiene 2 weist zur Wegbegrenzung für das Sperrelement 14 einen oberen Anschlag 10 und einen unteren Anschlag 12 auf. Zwischen diesen Anschlägen 10, 12 ist der Sperrelement 14 in der Vertikalrichtung z beweglich in der Ausnehmung 6 geführt.

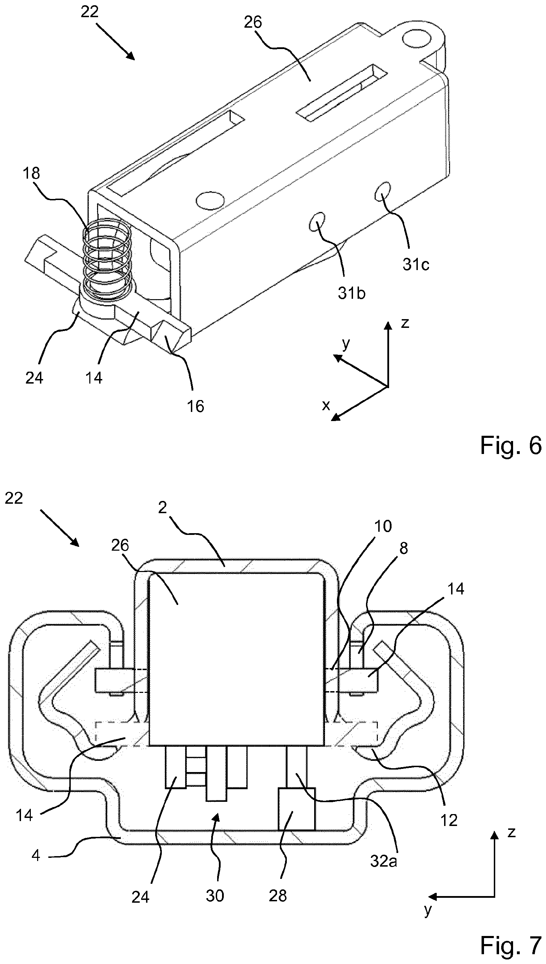

Fig. 6 zeigt eine perspektivische Darstellung einer ersten möglichen Ausgestaltung einer Memory-Vorrichtung 22 zur Betätigung des Sperrelements 14. Fig. 6 zeigt ein Gehäuse 26, welches in Richtung des Sperrelements 14 offen ausgestaltet ist, so dass ein Betätigungsarm 24 der Memory-Vorrichtung 22 von unten her an dem Sperrelement 14 angreifen und dieses in einer nach oben gerichteten Bewegung ansteuern kann. Die Betätigung von unten entspricht einer Ausgestaltung der Rückstellfeder 18 als Druckfeder, welche das Sperrelement 14 federbelastet in die Freigabestellung treibt und das Sperrelement 14 durch die Betätigung mittels des Betätigungsarms 24 entgegen der Kraft der Rückstellfeder 18 in die Blockierstellung bringbar ist. Ferner sind in dieser Darstellung eine im Gehäuse 26 gelagerte zweite Achse 31b und dritte Achse 31c gezeigt, auf denen jeweils nicht dargestellte Zahnräder eines Getriebes der Memory-Vorrichtung gelagert sind. Das Getriebe 30 der Memory-Vorrichtung 22 weist weiter eine von außen nicht einsehbare erste Achse 31a auf.

In Fig. 7 ist eine Querschnittsdarstellung eines erfindungsgemäßen Längseinstellers mit einer Memory-Vorrichtung 22 dargestellt. Fig. 7 zeigt hierbei eine der ersten Sitzschiene 2 zugeordnete und mit der zweiten Sitzschiene 4 zusammenwirkende Memory-Vorrichtung 22, welche eingerichtet ist, eine eingestellte Memoryposition zu speichern, welche durch eine vorgenommene Längsverschiebung des Fahrzeugsitzes 1 verlassen und wieder eingenommen werden kann. Die Memory-Vorrichtung 22 ist mit der ersten Sitzschiene 2, bevorzugt mittels einer Schraubverbindung zwischen dem Gehäuse 26 und der ersten Sitzschiene 2, verbunden. Ferner wirkt ein in einem Gehäuse 26 der Memory-Vorrichtung 22 angeordnetes Getriebe 30, insbesondere ein erstes Zahnrad 32a des Getriebes 30, mit einer in einem Bodenbereich der strukturfesten zweiten Sitzschiene 4 angeordneten Zahnstange 28 zusammen.

In Fig. 7 ist ebenfalls ein Sperrelement 14 gezeigt, welches zwischen einer Blockierstellung, in welcher das Sperrelement 14 wie dargestellt in Eingriff mit einer Verzahnung 8 der zweiten Sitzschiene 4 ist, und einer Freigabestellung, in welcher das Sperrelement 14 (gestrichelt dargestellt) außer Eingriff mit der zweiten Sitzschiene 4 ist, bewegbar ist. Das Sperrelement 14 ist vorliegend in einer vorgesehenen Ausnehmung 6 in der ersten Sitzschiene 2 gelagert und geführt. Das Sperrelement 14 ist in seiner Bewegung in Vertikalrichtung z in der Ausnehmung 6 der ersten Sitzschiene 2 durch einen oberen Anschlag 10 und einen unteren Anschlag 12 begrenzt. Hierbei stützt sich das Sperrelement 14 mittels einer Rückstellfeder 18 (aus darstellungstechnischen Gründen nicht zu sehen) an einem oberen Abschnitt der ersten Sitzschiene 2 ab. Die Rückstellfeder 18 kann hierbei insbesondere als Druckfeder oder als Zugfeder ausgestaltet sein, je nachdem ob das Sperrelement 14 federbelastet die Blockierstellung oder die Freigabestellung einnehmen soll.

Zum Betätigen des Sperrelements 14 weist die Memory-Vorrichtung 22 einen mit dem Getriebe 30 wirkverbundenen und relativ zu dem Getriebe beweglichen Betätigungsarm 24 auf. Spätestens beim Erreichen der gespeicherten Sitzlängsposition übt das Getriebe 30 ein Steuermoment auf den Betätigungsarm 24 aus, aufgrund dessen der Betätigungsarm 24 das Sperrelement 14 ansteuert. Unter "ansteuern" kann hierbei allgemein verstanden werden, dass mittels einer Bewegung des Betätigungsarmes 24 eine Veränderung der resultierenden, auf das Sperrelement 14 wirkenden Kraft erzielt wird.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren in Zusammenhang mit den Schutzansprüchen.

In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 2: erste Sitzschiene
- 4: zweite Sitzschiene
- 6: Ausnehmung
- 8: Verzahnung
- 8a: gerundete Kontur
- 10: oberer Anschlag
- 12: unterer Anschlag
- 14: Sperrelement
- 16: Schräge
- 18: Rückstellfeder
- 20: Pfeil
- 22: Memory-Vorrichtung
- 24: Betätigungsarm
- 26: Gehäuse
- 28: Zahnstange
- 30: Getriebe
- 31a: erste Achse
- 31b: zweite Achse
- 31c: dritte Achse
- 32a: erstes Zahnrad

- x: Längsrichtung
- y: Querrichtung
- z: Vertikalrichtung

## Patentansprüche

1. Längseinsteller für einen längseinstellbaren Fahrzeugsitz (1), aufweisend ein Schienenpaar mit einer strukturfesten zweiten Sitzschiene (4) und einer in dieser zweiten Sitzschiene (4) geführten, sitzfesten ersten Sitzschiene (2), eine Memory-Vorrichtung (22), welche zur Speicherung der Position der sitzfesten ersten Sitzschiene (2) in Bezug auf die strukturfeste zweite Sitzschiene (4) eingerichtet ist, sowie ein in der ersten Sitzschiene (2) geführtes Sperrelement (14) zum Verriegeln der ersten Sitzschiene (2) in ihrer Bewegung relativ zu der zweiten Sitzschiene (4), wobei das Sperrelement (14) in der ersten Sitzschiene (2) angeordnet und in einer Ausnehmung (6) der ersten Sitzschiene (2) geführt ist, wobei das Sperrelement (14) in Eingriff mit einer Verzahnung (8) und/oder einem Lochbild der zweiten Sitzschiene (4) bringbar ist, wobei das Sperrelement (14) mittels der Memory-Vorrichtung (22) betätigbar ist, wobei, wenn das Sperrelement (14) zur Blockierung der ersten Sitzschiene (2) in Eingriff mit der Verzahnung (8) und/oder dem Lochbild der zweiten Sitzschiene (4) ist, ein Kraftfluss von der ersten Sitzschiene (2) über das in der ersten Sitzschiene (2) geführte Sperrelement (14) zu der Verzahnung (8) oder dem Lochbild der zweiten Sitzschiene (4) verläuft, und sich die Memory-Vorrichtung (22) außerhalb des Kraftflusses zwischen der ersten Sitzschiene (2) und der zweiten Sitzschiene (4) befindet.

2. Längseinsteller gemäß Anspruch 1, wobei die Ausnehmung (6) der ersten Sitzschiene (2) zur Wegbegrenzung für das Sperrelement (14) einen oberen Anschlag (10) und einen unteren Anschlag (12) aufweist.

3. Längseinsteller gemäß Anspruch 2, wobei ein Anliegen des Sperrelements (14) am unteren Anschlag (12) der Freigabestellung entspricht.

4. Längseinsteller gemäß einem der Ansprüche 2 bis 3, wobei ein Anliegen des Sperrelements (14) am oberen Anschlag (10) der Blockierstellung entspricht.

5. Längseinsteller gemäß einem der Ansprüche 1 bis 4, wobei das Sperrelement (14) eine Schräge (16) aufweist.

6. Längseinsteller gemäß Anspruch 5, wobei die Schräge (16) im Falle einer Vorwärtsbewegung der ersten Sitzschiene (2) relativ zur zweiten Sitzschiene (4) mit einer bereichsweise abgerundeten Kontur (8a) der Verzahnung (8) zusammenwirkt.

7. Längseinsteller gemäß einem der Ansprüche 1 bis 6, wobei die Memory-Vorrichtung (22) zum Betätigen des Sperrelements (14) einen mit einem Getriebe (30) wirkverbundenen und relativ zu dem Getriebe (30) beweglichen Betätigungsarm (24) aufweist.

8. Längseinsteller gemäß einem der Ansprüche 1 bis 7, wobei das Sperrelement (14) mittels einer eine Rückstellfeder (18) selbstständig in die Blockierstellung oder die Freigabestellung überführbar ist.

9. Längseinsteller gemäß Anspruch 8, wobei die Rückstellfeder (18) als Zugfeder oder als Druckfeder ausgestaltet ist.

10. Längseinsteller gemäß einem der Ansprüche 8 bis 9, wobei der Betätigungsarm (24) der Memory-Vorrichtung (22) von unten her, entgegen der Druckkraft der Rückstellfeder (18) an dem Sperrelement (14) angreift, wenn die Rückstellfeder (18) in Form einer Druckfeder ausgestaltet ist, welche das Sperrelement (14) selbstständig in die Freigabestellung bewegt.

11. Längseinsteller gemäß einem der Ansprüche 8 bis 9, wobei der Betätigungsarm (24) der Memory-Vorrichtung (22) von oben her, entgegen der Zugkraft der Rückstellfeder (18) an dem Sperrelement (14) angreift, wenn die Rückstellfeder (18) in Form einer Zugfeder ausgestaltet ist, welche das Sperrelement (14) selbstständig in die Blockierstellung bewegt.

12. Längseinsteller gemäß Anspruch 11, wobei der Betätigungsarm (24) bei einem Wiedererreichen der Memory-Position das Sperrelement (14) aus der Freigabestellung freigibt.

13. Längseinsteller gemäß Anspruch 12, wobei eine fixe Verbindung zwischen je einem Endabschnitt der Rückstellfeder (18) und jeweils der ersten Sitzschiene (2) und dem Sperrelement (14) vorgesehen ist.

14. Fahrzeugsitz (1) aufweisend wenigstens einen Längseinsteller gemäß einem der vorhergehenden Ansprüche.

## Claims

1. Longitudinal adjuster for a longitudinal adjustable vehicle seat (1), having a rail pair with a second seat rail (4) which is fixed with respect to a structure and with a first seat rail (2) which is guided in said second seat rail (4) and which is fixed with respect to a seat, having a memory device (22) which is configured for storing the position of the first seat rail (2), which is fixed with respect to the seat, in relation to the second seat rail (4), which is fixed with respect to the structure, and having a blocking element (14) which is guided in the first seat rail (2) and which serves for locking the first seat rail (2) in terms of its movement relative to the second seat rail (4), wherein the blocking element (14) is arranged in the first seat rail (2) and is guided in a recess (6) of the first seat rail (2), wherein the blocking element (14) can be placed in engagement with a toothing (8) and/or a set of holes of the second seat rail (4), wherein the blocking element (14) is actuatable by means of the memory device (22), wherein, if the blocking element (14) is in engagement with the toothing (8) and/or with the set of holes of the second seat rail (4) for the purposes of blocking the first seat rail (2), a force flow runs from the first seat rail (2) via the blocking element (14) guided in the first seat rail (2) to the toothing (8) or to the set of holes of the second seat rail (4), and the memory device (22) is situated outside the force flow between the first seat rail (2) and the second seat rail (4).

2. Longitudinal adjuster according to Claim 1, wherein the recess (6) of the first seat rail (2) has an upper stop (10) and a lower stop (12) for limiting the movement of the blocking element (14).

3. Longitudinal adjuster according to Claim 2, wherein an abutment of the blocking element (14) against the lower stop (12) corresponds to the release position.

4. Longitudinal adjuster according to either of Claims 2 and 3, wherein an abutment of the blocking element (14) against the upper stop (10) corresponds to the blocking position.

5. Longitudinal adjuster according to any of Claims 1 to 4, wherein the blocking element (14) has a bevel (16).

6. Longitudinal adjuster according to Claim 5, wherein, in the case of a forward movement of the first seat rail (2) relative to the second seat rail (4), the bevel (16) interacts with a regionally rounded contour (8a) of the toothing (8).

7. Longitudinal adjuster according to any of Claims 1 to 6, wherein the memory device (22) has, for the actuation of the blocking element (14), an actuating arm (24) which is operatively connected to a mechanism (30) and which is movable relative to the mechanism (30).

8. Longitudinal adjuster according to any of Claims 1 to 7, wherein the blocking element (14) can be automatically transferred into the blocking position or the release position by means of a resetting spring (18).

9. Longitudinal adjuster according to Claim 8, wherein the resetting spring (18) is designed as a tension spring or as a compression spring.

10. Longitudinal adjuster according to either of Claims 8 and 9, wherein the actuating arm (24) of the memory device (22) engages on the blocking element (14) from below, counter to the pressure force of the resetting spring (18), if the resetting spring (18) is designed in the form of a compression spring which automatically moves the blocking element (14) into the release position.

11. Longitudinal adjuster according to either of Claims 8 and 9, wherein the actuating arm (24) of the memory device (22) engages on the blocking element (14) from above, counter to the tension force of the resetting spring (18), if the resetting spring (18) is designed in the form of a tension spring which automatically moves the blocking element (14) into the blocking position.

12. Longitudinal adjuster according to Claim 11, wherein the actuating arm (24), when the memory position is reached again, releases the blocking element (14) from the release position.

13. Longitudinal adjuster according to Claim 12, wherein a fixed connection is provided between in each case one end portion of the resetting spring (18) and the first seat rail (2) and the blocking element (14) respectively.

14. Vehicle seat (1) having at least one longitudinal adjuster according to any of the preceding claims.

## Revendications

1. Dispositif d'ajustement en longueur pour un siège de véhicule ajustable en longueur (1), présentant une paire de rails avec un deuxième rail de siège (4) fixé à la structure et un premier rail de siège (2) fixé au siège, guidé dans ce deuxième rail de siège (4), un dispositif de mémoire (22) qui est prévu pour mémoriser la position du premier rail de siège (2) fixé au siège par rapport au deuxième rail de siège (4) fixé à la structure, ainsi qu'un élément de blocage (14) guidé dans le premier rail de siège (2) pour verrouiller le premier rail de siège (2) dans son déplacement par rapport au deuxième rail de siège (4), l'élément de blocage (14) étant disposé dans le premier rail de siège (2) et étant guidé dans un évidement (6) du premier rail de siège (2), l'élément de blocage (14) pouvant être amené en prise avec une denture (8) et/ou avec un motif de trous du deuxième rail de siège (4), l'élément de blocage (14) pouvant être actionné au moyen du dispositif de mémoire (22), et, lorsque l'élément de blocage (14) pour bloquer le premier rail de siège (2) est en prise avec la denture (8) et/ou avec le motif de trous du deuxième rail de siège (4), un flux de force du premier rail de siège (2) s'étendant par le biais de l'élément de blocage (14) guidé dans le premier rail de siège (2) vers la denture (8) ou le motif de trous du deuxième rail de siège (4), et le dispositif de mémoire (22) se trouvant à l'extérieur du flux de force entre le premier rail de siège (2) et le deuxième rail de siège (4).

2. Dispositif d'ajustement en longueur selon la revendication 1, dans lequel l'évidement (6) du premier rail de siège (2), pour limiter la course de l'élément de blocage (14), présente une butée supérieure (10) et une butée inférieure (12).

3. Dispositif d'ajustement en longueur selon la revendication 2, dans lequel une application de l'élément de blocage (14) contre la butée inférieure (12) correspond à la position de libération.

4. Dispositif d'ajustement en longueur selon l'une quelconque des revendications 2 et 3, dans lequel une application de l'élément de blocage (14) contre la butée supérieure (10) correspond à la position de blocage.

5. Dispositif d'ajustement en longueur selon l'une quelconque des revendications 1 à 4, dans lequel l'élément de blocage (14) présente un biseau (16).

6. Dispositif d'ajustement en longueur selon la revendication 5, dans lequel le biseau (16), dans le cas d'un déplacement vers l'avant du premier rail de siège (2) par rapport au deuxième rail de siège (4), coopère avec un contour en partie arrondi (8a) de la denture (8).

7. Dispositif d'ajustement en longueur selon l'une quelconque des revendications 1 à 6, dans lequel le dispositif de mémoire (22), pour actionner l'élément de blocage (14), présente un bras d'actionnement (24) en liaison fonctionnelle avec un engrenage (30) et déplaçable par rapport à l'engrenage (30).

8. Dispositif d'ajustement en longueur selon l'une quelconque des revendications 1 à 7, dans lequel l'élément de blocage (14) peut être transféré automatiquement dans la position de blocage ou dans la position de libération au moyen d'un ressort de rappel (18).

9. Dispositif d'ajustement en longueur selon la revendication 8, dans lequel le ressort de rappel (18) est réalisé sous forme de ressort de traction ou sous forme de ressort de compression.

10. Dispositif d'ajustement en longueur selon l'une quelconque des revendications 8 et 9, dans lequel le bras d'actionnement (24) du dispositif de mémoire (22) s'engage par le dessous à l'encontre de la force de compression du ressort de rappel (18) avec l'élément de blocage (14) lorsque le ressort de rappel (18) est réalisé sous la forme d'un ressort de compression qui déplace l'élément de blocage (14) automatiquement dans la position de libération.

11. Dispositif d'ajustement en longueur selon l'une quelconque des revendications 8 et 9, dans lequel le bras d'actionnement (24) du dispositif de mémoire (22) s'engage par le dessus à l'encontre de la force de traction du ressort de rappel (18) avec l'élément de blocage (14) lorsque le ressort de rappel (18) est réalisé sous la forme d'un ressort de traction qui déplace l'élément de blocage (14) automatiquement dans la position de blocage.

12. Dispositif d'ajustement en longueur selon la revendication 11, dans lequel le bras d'actionnement (24) libère l'élément de blocage (14) de la position de libération une fois la position mémorisée à nouveau atteinte.

13. Dispositif d'ajustement en longueur selon la revendication 12, dans lequel il est prévu une liaison fixe entre une portion d'extrémité respective du ressort de rappel (18) et, respectivement, le premier rail de siège (2) et l'élément de blocage (14).

14. Siège de véhicule (1) présentant au moins un dispositif d'ajustement en longueur selon l'une quelconque des revendications précédentes.
